# NEUE EUROPÄISCHE PATENTSCHRIFT

(11) **EP 0 975 442 B2**
(45) Veröffentlichungstag und Bekanntmachung des Hinweises auf die Entscheidung über den Einspruch: **20.06.2007**
(45) Hinweis auf die Patenterteilung: 19.09.2001
(21) Anmeldenummer: 97921794.0
(22) Anmeldetag: 26.04.1997
(51) Int. Cl.: B07C 3/20

(54) **VERFAHREN ZUR VERARBEITUNG VON POSTSACHEN**
METHOD OF PROCESSING POSTAL MATTERS
PROCEDE DE TRAITEMENT D'OBJETS POSTAUX

(30) Priorität: 22.06.1996 DE 19624977
(43) Veröffentlichungstag der Anmeldung: 02.02.2000
(73) Patentinhaber: SIEMENS AKTIENGESELLSCHAFT, 80333 München (DE)
(72) Erfinder: HÄNSEL, Karl-Günther, D-78464 Konstanz (DE); ROSENBAUM, Walter, F-75116 Paris (FR)
(74) Vertreter: Hellebrandt, Martin
(86) Internationale Anmeldenummer: PCT/EP1997/002167
(87) Internationale Veröffentlichungsnummer: WO 1997/049503

(56) Entgegenhaltungen:
- EP-A- 0 584 607
- EP-A- 0 589 119
- EP-A- 0 635 314
- EP-B1- 0 424 728
- "A vision of the future", von Dr. M.Prasser, erschienen in der Januar-Ausgabe 1999 in der Zeitschrift Automation
- "Video Coding for Automated Letter Sorting" von Karl Heinz Reich, erschienen in "Jet Poste 93 Premières journées européennes sur les technologies postales 14-15-16 juin 1993" Band 1, Seiten 393 bis 402
- "A Contextual Approach to Address Interpretation" von David H. Gibbs, Michael J. Cykana, Russel A. Duderstadt and Ayoub V. Monfared, erschienen in "United States Postal Service Advanced Technology Conference November 5-7, 1990", Band 2, Seiten 807 bis 820
- "A System for the Analysis of Machine Printed Address Block Images Using Contextual Information" von Daniel J. Hepp, Margaret J. Ganzberger, Michael P. Whalen, Thomas M. Peurach, Brian D. Forester and Andrew M. Gillies, erschienen in "United States Postal Service Advanced Technology Conference November 30 - Dezember 2, 1992", Band1, Seiten 353 bis 366
- Auszug einer Ausschreibung der daenischen Post von Juli 1993
- Auszug einer Ausschreibung versehen mit einem Datum von 1994, Kapitel 3, Seiten i, ii und 14

## Beschreibung

Die Erfindung betrifft ein Verfahren gemäß dem Oberbegriff der unabhängigen Patentansprüche. Im weitesten Sinne bezieht sich die Erfindung auf das Gebiet automatischer Briefverarbeitung und insbesondere auf Systeme, bei denen ein automatisches Adreßleseverfahren durch Videocodierung bei der Adreßinterpretation ergänzt und verbessert wird.

Systeme zum automatischen Lesen von Adressen (OCR) sind auf dem Gebiet der Briefbearbeitung wohlbekannt und z.B. in der DE 195 31 392 beschrieben. Mit modernen OCR-Briefsortieranlagen sind Bearbeitungsraten von 10 Briefen pro Sekunde, d.h. 36.000 Briefen pro Stunde und mehr erreichbar. Die Erkennungszuverlässigkeit variiert jedoch stark mit der Schriftart und Gesamtqualität der auf die Oberflache der Briefe aufgebrachten Adreßinformation. Im Falle einer erfolgreichen Erkennung kann der betreffende Brief mit einem maschinenlesbaren Barcode versehen werden. Dieser Barcode erlaubt eine weitere mechanische Bearbeitung bis zu einer beliebigen gewünschten Sortierordnung. Insbesondere ermöglicht die Verwendung von Barcodes eine Sortierung der Briefe bis zur Sortierebene des Postgangs, bei der Briefe entsprechend der Reihenfolge ihrer Veteilung durch den Zusteller sortiert werden.

Da die Erkennungsraten der automatischen Lesesysteme sehr variieren, ist es notwendig, diese durch verschiedene Formen von manueller Intervention zu unterstützen. Die einfachste Intervention ist Zurückweisung nicht automatisch lesbarer Briefe, und die Durchführung eines Handsortierverfahrens. Allerdings sind die dadurch entstehenden Kosten mit zunehmenden Arbeitskosten unökonomisch hoch. Hinzu kommt, daß solche handsortierte Post auch zu späteren Zeitpunkten nicht mehr ohne weiteres mechanisch weitersortiert werden kann. so daß zwei voneinander getrennte Ströme von Sendungen erzeugt werden, die wiederum manuell zu einem bestimmten Zeitpunkt verschmolzen werden müssen.

Um diese Nachteile manueller Sortierung von OCR-zurückgewiesenen Sendungen zu vermeiden, sind verschiedene Verfahren zur manuellen Codierung von Poststücken entwickelt worden. Alle diese Verfahren verwenden Interventionen durch Operatoren, um Barcodes auf die Sendungen auf eine Weise aufzubringen, die konsistent ist mit dem Erfordernis, eine mechanische Sortierung durch die gleichen Maschinen vorzunehmen, die OCR-gelesene und barcodierte Post bearbeiten.

Ein weiteres Verfahren, um zurückgewiesene. Poststücke zu codieren, verwendet sogenannte manuelle Codierplätze. An diesen manuellen Codierplätzen werden die Sendungen physikalisch hintereinander einem-Operator vorgeführt, wobei der Operator für jede dieser Sendungen so viel Information codiert wie notwendig ist, um den Bestimmungsort eindeutig zu identifizieren. Dabei wird die eingegebene Adresse mittels eines Verzeichnisses in einen Sortierbarcode umgewandelt. der auf die Sendung aufgebracht wird. Die codierten Sendungen werden dann mittels Barcodesortierer (BCS), die identisch mit OCR-geeigneten BCS sind, weiterbearbeitet. Solche manuellen Codierplätze wurden als erste von der US-Post und der Royal Mail in den 70er Jahren eingeführt. Die Hauptnachteile solcher Vorrichtungen bestehen in der notwendigen Entfernung von Sendungen aus dem OCR-Sendungsstrom und ergonomischen Schwierigkeiten für den Operator beim Erkennen der ihm vorbeigeführten Sendungen.

Der nachste Fortschritt in der Behandlung von OCR-zurückgewiesenen Sendungen war die Entwicklung von On-line-Videocodiersystemen (OVS). In einem OVS wird ein Videobild der Sendung einem Operator zum Codieren vorgeführt statt der physikalischen Sendung bei den manuellen Codierplätzen. Das Videobild wird dem Operator gezeigt, während die physikalische Sendung in Verzögerungsstrecken gehalten wird. In diesen Verzögerungsstrecken wird normalerweise die Sendung in Bewegung gehalten für eine Zeitdauer, die ausreicht, damit der OVS-Operator die notwendige Sortierinformation für das betreffende Bild eingibt. Die üblichen Verzögerungsstrecken erlauben eine Verzögerung zwischen 10 und 30 Sekunden. Je länger die Verzögerungsstrecke, desto größer sind die Kosten sowie die Erfordernisse für Wartung und die physische Größe der Anlage.

Das Hauptproblem bei der Verwendung von OVS ist, daß die zur Verfügung stehende Zeit lediglich ausreicht für eine sorgfältige Eingabe der Postleitzahl (ZIP) oder des Postcodes (PC), es sei denn, daß unpraktikabel lange Verzögerungsstrecken verwendet werden.

Daher wurden spezielle Codierverfahren entwickelt, um die notwendige On-line-Verzögerungszeit möglichst gering zu halten.

Um die Codierproduktivität zu erhöhen und/oder die Angabe von sämtlichen Adreßelementen, d. h. ZIP/PC, Straße/Postfach, Adressat/Postfach, Adressat/Firma, zu ermöglichen, sind im Stand der Technik verschiedene Methoden entwickelt worden. Im wesentlichen sind dies:

### Vorschau-Codierung

Bei der Vorschau-Codierung erfolgt eine simultane Anzeige der Bilder von zwei Sendungen; eines über dem anderen. Hierbei ist das niedrigere Bild das aktive, d. h. das dessen Daten codiert werden. Nach einem geeigneten Training ist es Operatoren möglich, die Information auf dem unteren Bild zu codieren, während sie bereits die Adreßinformation vom oberen Bild aufnehmen. Das obere Bild wird anschließend aktiv und der Prozeß wird fortgesetzt. Mit der Vorschau-Codierung ist es möglich, durch eine vollständige Überlappung der kognitiven und motorischen Funktionen beim Codieren aufeinanderfolgender Abbilder die Operator-Produktivität zu verdoppeln.

### Extraktionscodierung

Da bei dem praktisch erreichbaren On-line-Verzögerungs-Zeiten lediglich die ZIP/PC Adreßelemente verläßlich vom Operator eingegeben werden können, werden beim Extraktionscodieren bestimmte Schlüsselbestandteile der sich auf die Straße beziehenden Adreßbestandteile eingegeben. Üblicherweise basiert die Extraktionscodierung auf speziell entwickelten Regeln, bei denen ein Code fester Länge als Zugangsschlüssel zu einem Adreßverzeichnis verwendet wird. Zum Beispiel verwendet die Royal Mail eine Extraktionsformel, die auf den ersten drei und den letzten zwei Buchstaben basiert. Dabei müssen Sonderregeln vom Operator auswendig gelernt werden, um überflüssige Adreßinformationen zu vermeiden und bestimmte unterscheidende Merkmale wie z.B. Richtungen zu berücksichtigen, z.B. Ost, West oder Kategorien z.B. Street, Lane, Road.

Extraktionscodierung besitzt trotz ihrer gewissen Effektivitat einige größere Nachteile: insbesondere komplexe Extraktionsregeln, die häufig die Berücksichtigung des Endes eines Straßennamens erfordern, während diese Bestandteile üblicherweise am unklarsten geschrieben sind. Außerdem findet man eine signifikant hohe Rate von nicht eindeutigen Extraktionen, bei denen mehrere Einträge in einem Verzeichnis dem Extraktionscode entsprechen, so daß keine eindeutige Sortierentscheidung getroffen werden kann. Desweiteren ist zu berücksichtigen, daß die Eingabeproduktivität der Operatoren vermindert wird, sobald vom Operator Entscheidungen getroffen werden müssen, statt einer einfachen repetitiven Tastatureingabe.

### Komplettierungscodierung

Bei der Komplettierungscodierung wird im Kontrast zur Extraktionscodierung für jede zu kodierende Adresse eine variable Eingabe vorgenommen. Im Wesentlichen wird bei der Adreßeingabe ein Abgleich mit dem Adreßverzeichnis vorgenommen, bis eine eindeutige Übereinstimmung erreicht ist. Durch die Darstellung des Rests der Adresse, sobald eine eindeutige Teilübereinstimmung identifiziert worden ist, wird ein Beschleunigungseffekt erreicht. Probleme treten bei dieser Technik jedoch dadurch auf, daß dem Operator ein Eingabestop-Signal zugeführt werden muß und eine Darstellung des identifizierten Adreßrests notwendig ist, was zu einer verminderten Eingabeproduktivität führt und eine Vorausschau-Codierung unmöglich macht.

### Operatorassistierte OCR-Technik

Zur Erhöhung der On-line zu verarbeitenden Adreßinformation hat die US Post mit Operator assistierten OCR-Techniken experimentiert. Hierbei wird zur Erhöhung der Effektivität der. Teil des Adreßbildes hervorgehoben. bei dem die OCR-Erkennung versagt hat. Da die Operatoren bei der Entzifferung von fehlenden Buchstaben langsam sind und zum Teil auch komplexe Erkennungstehler, z.B. Segmentierungsprobleme auftreten, ist bei diesem Verfahren die Operatorproduktivität häufig niedriger als bei einfache Wiedereingabe der betreffenden Adresse.

### Off-line Codierung

Da bei keiner der oben erwähnten Codiarungstechniken eine ausreichend hohe Produktivität bei reiner On-line-Codierung erreicht wird, wurde kürzlich ein off-line Codiersystem eingeführt, wie in der US PS 49 92 649 beschrieben. Bei diesem System werden Sendungen mit nicht erkannten Adressen mit einer zusätzlichen Information, einer tracking identification (TID) versehen. Die nicht erkannten Sendungen werden extern gespeichert, während die Bilder dieser Sendungen Operatoren zum Codieren präsentiert werden, wobei keine zeitlichen Einschränkungen vorliegen. Anschließend werden die Sendungen TID-Lesegeräten vorgeführt. Die TID wird mit der eingegebenen Adreßinformation verknüpft. Darauf basierend kann auch eine übliche Barcode-Sortierinformation auf die Sendung aufgebracht werden, so daß die betreffende Sendung wie üblicherweise OCR-gelesene Sendungen bearbeitet werden können. Obwohl das off-line-Video-Codierverfahren eine effektive Methode zur Codierung sämtlicher Adreßbestandteile darstellt, werden zusätzlich Kapazitäten für die Weiterverarbeitung mit nichtgelesenen Adressen versehenen Sendungen und eine entsprechend komplexe Logistik verlangt.

In EP 0 635 314 A1 wird eine Lösung beschrieben, bei der von den Sendungen Videobilder erzeugt werden, und während sich die Sendungen in einer Speicherstrecke befinden, erfolgt ein Leseversuch in einer OCR-Einheit. Kann kein eindeutiges Leseergebnis innerhalb einer vorgegebenen Zeit erzielt werden, so werden die entsprechenden Videobilder an Videocodierplätze übertragen. Kann die Adresse während Verweilzeit der jeweiligen Sendung in der Speicherstrecke durch die Videocodierkraft codiert werden, so wird durch einen Barcodedrucker ein entsprechender Barcode auf die Sendung gedruckt. Wenn nicht, wird ein ldentifikationsbarcode aufgedruckt. Das Videobild kann dann später off-line codiert werden, und eine Zuordnung des Codes erfolgt über den Identifikationscode.

Aus der EP-A-589119 ist ein Verfahren zum Finden der Adreßblöcke in den Abbildungen der Sendungsoberflächen beschrieben. Sind diese bei der automatischen Suche nicht eindeutig lokalisiert worden, so werden die Abbilder anschließend einer Videocodierung zugeführt. Dabei kennzeichnet der Operator dieses Gebiet, das dann gespeichert wird. Dann wird die automatische Adreßblocksuche damit belehrt, so daß die Adreßblöcke für weitere gleichgeartete Sendungen von Großkunden automatisch gefunden werden können. Dieses Verfahren betrifft eine der Adreßinterpretation vorgelagerte Stufe. Ein Verfahren gemäss dem Oberbegriff des Anspruchs 1 ist aus dem Dokument EP 0424 728 B1 bekannt. Dieses offenbart ein Verfahren zur Bearbeitung von Sendungen in einem automatischen Adresslesesystem, wobei ein Abbild der die Adressinformation aufweisen den Oberfläche jeder Sendung gewonnen und einer OCR-Einheit zur automatischen Auswertung zugeführt wird das zugehörige Abbild an einen Viedeocodierplatz zur Videocodierung weitergeleitet wird.

Aufgabe der vorliegenden Erfindung ist es, in möglichst kurzer Zeit die Adressen von Sendungen erfolgreich in einem Adreßlesesystem mit OCR-Einheit und Videocodiereinheit zu lesen. Die Aufgabe wird durch ein Verfahren gemäss Anspruch 1 zur Bearbeitung von Sendungen in einem automatischen Adresslesesystem gelöst wobei ein Abbild der die Adressinformation aufweisenden Oberfläche jeder Sendung gewonnen und einer OCR-Einheit zur automatischen Auswertung zugeführt wird, und bei nicht eindeutig erkannter Adressinformation das zugehörige Abbild an einen Videocodierplatz zur Videocodierung weitergeleitet wird, wobei das Verfahren dadurch gekennzeichet ist, dass eine Entscheidung getroffen wird, ob eine vollständige Auswertung der Adressinformation des Abbildes bei der Videocodierung erfolgt ist und dass bei einer negativen Entscheidung das Abbild jeder innerhalb einer bestimmten Zeit mittels Videocodierung nicht eindeutig erkannten vollständigen Adressinformation mit den bei der Videocodierung erhaltenen Informationen über erkannte Adressteile der OCR-Einheit zu einer weiteren automatischen Auswertung zur Adressinterpretation zugeführt wird.

Die Erfindung ermöglicht eine verbesserte Integration von automatischen Lesesystemen und Videocodierung. Weiter ermöglicht die Erfindung die effektive Verwendung einer Extraktionscodierung in integrierten automatischen Videocodiersystem, insbesondere auch eine Vereinfachung des Entscheidungsproblems für die Operatoren bei der Adreßcodierung. Ein weiterer Vorteil des erfindungsgemäßen Verfahrens ist, daß zusätzliche Sortierinfomationen, z.B. solche, die sich auf die Namenszeile der Adresse beziehen, effektiv ausgewertet werden können. Ein weiterer Vorteil der Erfindung besteht darin, daß Inkonsistenzen, die sich z.B. bei der Extraktionscodierung oder durch Fehler bei der Beschriftung von seiten des Absenders ergeben, effektiv behandelt werden können. Das Verfahren ermöglicht weiter eine einfache Intregration von on-line und off-line-Codierung sowie des Vorschau-Codierungsverfahrens.

Vorteilhafte Ausführungsformen der Erfindung sind den abhängigen Ansprüchen und der Beschreibung zu entnehmen.

Im folgenden wird die Erfindung anhand von Zeichnungen beispielhaft dargestellt. Im einzelnen zeigen:
- FIG 1: eine schematische Darstellung einer Vorrichtung zur Ausführung des Verfahrens
- FIG 2 und 3: eine Übersicht über den Datenfluß gemäß der Erfindung

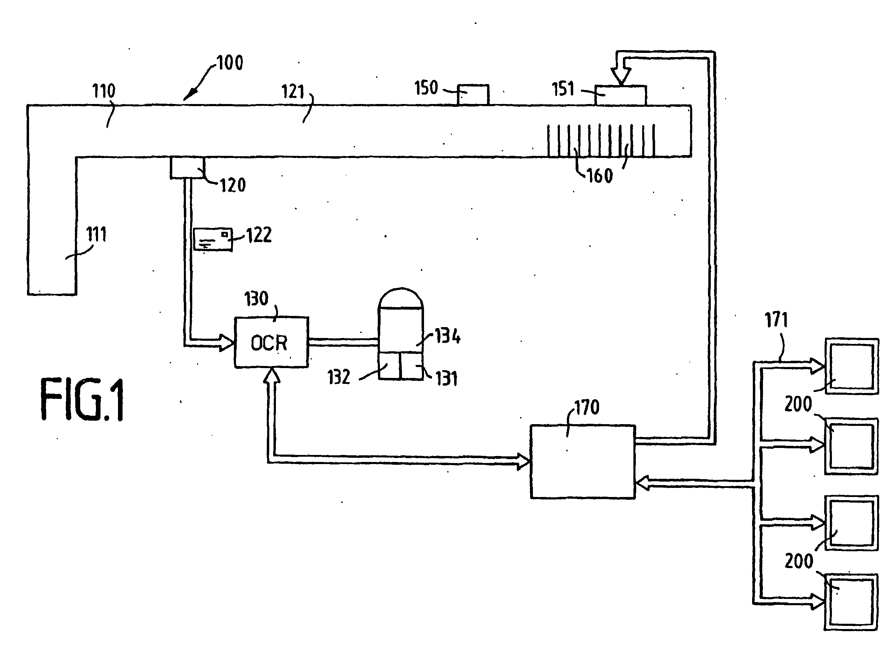

FIG 1 zeigt eine schematische Darstellung einer Briefverteilanlage mit der das erfindungsgemäße Verfahren ausgeführt werden kann. Der OCR-Briefsortierer 100 besteht aus einer Zuführeinrichtung 110, die sukzessive Sendungen aus einem Magazin 111 abzieht und mit ca. 10 Sendungen pro Sekunde zu einem hochauflösenden Videoscanner 120 transportiert. Anschließend werden die Sendungen in einer Verzögerungsstrecke 121 transportiert. Die Sendungen weisen üblicherweise auf ihrer Oberfläche Adreßinformationen auf. Im OCR-Prozessor 130 erfolgt eine Auswertung der Adreßinformationen der Abbilder der Sendungen, die vom Videoscanner 120 gewonnen wurden. Im Fall einer vollständigen Auswertung wird ein Barcodedrucker 150 angesteuert und die Sendung wird mit einem entsprechenden Barcode für die anschließende Sortierung in Sortierfächer 160 versehen. Der OCR-Prozessor 130 besteht aus einem oder mehreren Microprozessoren 131 mit assoziiertem Speicher 132, um Abbilder der Sendungen zu speichern. Weiterhin beinhaltet der OCR-Prozessor ein Adreßverzeichnis 134 mit ZIP-Codes. Städtenamen und Straßennamen und evtl. weiterer adreßbezogener Information. Bei der Auswertung der Adreßinformation aufweisenden Abbilder erfolgt eine merkmalsgesteuerte Reduktion der aus dem Adreßverzeichnis gewonnenen Eintragung, so daß eine Art Teilwörterbuch erzeugt wird. In einzelnen Eintragungen werden dabei Glaubwürdigkeiten zugeordnet, so daß bei der Auswertung eine Anzahl von Daten von richtig erkannten Adressen erzeugt werden. Die Vorrichtung enthält weiterhin einen Imagecontroler 170 sowie eine Anzahl Video-Codierplätze 200, die mit dem Imagecontroler 170 direkt oder durch ein lokales Netzwerk (LAN) 171 verbunden sind. Falls die OCR-Auswertung eines Abbildes nicht, d.h. vollstandig erfolgreich war, wird dieses Bild vom OCR-Prozessor 130 zum Image-Controler 170 transferiert, der einerseits den TID Barcodedrucker 151 steuert und andererseits das entsprechende Bild zu einer der Videocodierplatze 200 sendet. Der TID Barcodeprinter 151 bringt auf die entsprechende Sendung einen Identifikationscode TID auf, der es zu einem späteren Zeitpunkt ermöglicht, die ausgewertete Adreßinformation mit der physikalischen Sendung zu verknüpfen. Die Auswertung der Abbilder erfolgt in diesem Fall vorzugsweise off-line, obwohl grundsätzlich bei einer genügend langen Verzögerungszeit auch eine on-line-Auswertung durch Videocodierung möglich ist. Im letzteren Fall kann der TID auch zu einem späteren Zeitpunkt, d.h. wenn die Videocodierung innerhalb einer bestimmten vorgegebenen Zeit nicht zu einer vollständigen Auswertung geführt hat, auf die Sendungen aufgebracht werden.

Zur Ausführung des weiteren genauer dargestellten Verfahrens ist der Image-Controler 170 derart ausgebildet, daß von der Videocodierung nicht vollständig ausgewertete Adreßinformationen unter Verwendung der Ergebnisse der Videocodierung im OCR-Prozessor einer weiteren automatischen Adreßauswertung zugeführt werden.

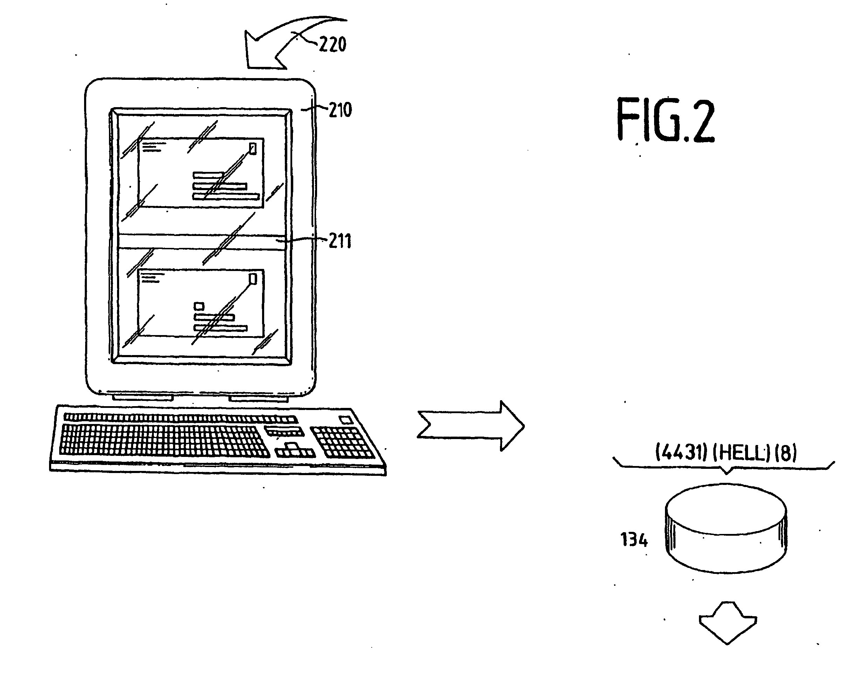

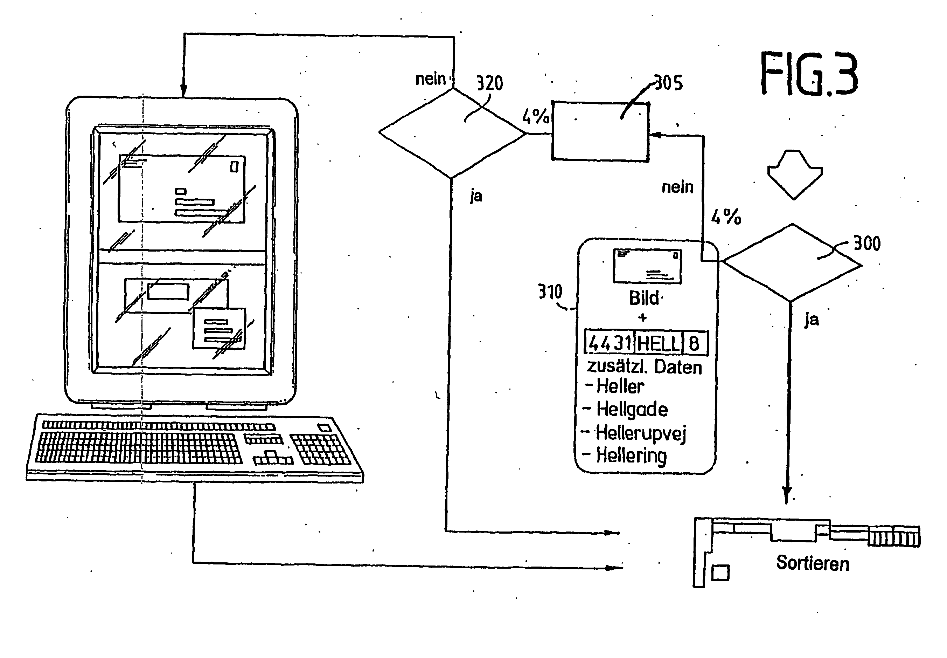

FIG 2 und 3 zeigen Datenflußdiagramme. Vorzugsweise arbeiten die Operatoren mit einer geteilten Anzeige 210, von denen der obere eine Vorschau ermöglicht und der untere üblicherweise aktiv ist. Vom Operator eingegebene Daten werden in der Promptzeile 211 dargestellt. Zum Videocodieren gelangen solche Abbilder von Sendungen, die nicht vollständig automatisch ausgewertet wurden 220. Beim Beispiel der FIG 2 erfolgt eine Eingabe eines ZIP-Codes "4431", eines Extraktionscodes für die Straße "Hell" sowie die Hausnummmer "8". Statt eines zweigeteilten Displays sind auch andere Formen möglich. Diese Eingabeinformationen werden benutzt, um im Adressenverzeichnis 134 passende Einträge zu identifizieren. Für den Fall, daß eine eindeutige Zuordnung zwischen der eingegebenen Information und einem Eintrag im Adressenverzeichnis 134 gefunden wurde, ist damit grundsätzlich eine vollständige Auswertung der Adreßinformation des betreflenden Abbildes erfolgt. Allerdings ist für einen gewissen Prozentsatz von Eingaben eine solche Eindeutigkeit nicht erreichbar, da eine Anzahl verschiedener Adreßeinträge der codierten Adreßinformation entsprechen.

Gemäß FIG 3 erfolgt eine Entscheidung 300, ob eine vollständige Auswertung der Adreßinformation eines Abbildes bei der Videocodierung erfolgt ist. Ist die Entscheidung positiv (Yes), kann die entsprechende Sendung entweder mit einem Barcode versehen werden, wenn die Verzögerungszeit ausgereicht hat, um eine On-line-Video-Codierung durchzuführen, oder es wird eine entsprechende Verknüpfung der TID und eine darauf basierende Barcodierung vorgenommen. In jedem Fall kann die entsprechende Sendung mit üblichen Mitteln weiter sortiert werden. Bei einer negativen Entscheidung (No) erfolgt erfindungsgemäß eine weitere automatische Auswertung 305 unter Verwendung der Ergebnisse der Videocodierung, d.h. bei dieser weiteren automatischen Auswertung stehen dem OCR-Prozessor neben den auf der Abbild dargestellten Informationen die durch die Videocodierung gewonnenen Informationen zur Verfügung; im obigen Beispiel das Tripel "4432", "Hell", "8". Dies ist in FIG 3 symbolisch durch den Inhalt des Kreises 310 zum Ausdruck gebracht. Anschließend erfolgt eine Entscheidung 320, ob nunmehr eine vollständige Auswertung des betreffenden Bildes stattgefunden hat. Im positiven Fall (Yes) wird die entsprechende Information zum weiteren Sortieren der Sendung verwendet analog wie nach einer positiven : Entscheidung beim Entscheidungspunkt 300. Ist die Entscheidung negativ (No), erfolgt eine weitere Videocodierung unter Verwendung der Ergebnisse der weiteren automatischen Auswertung. Vorzugsweise werden dabei dem Operator eine Anzahl von Alternativen zur Selektion vorgeführt, aus denen eine Selektion vorzunehmen ist.

Vorzugsweise werden die beiden letzten Schritte des Verfahrens, nämlich die weitere automatische Auswertung sowie die weitere Videocodierung, nicht mehr on-line sondern off-line erfolgen, weil die zur Verfügung stehende Verzögerungszeit zu gering ist für eine on-line-Ausfuhrung.

Das erfindungsgemaße Verfahren beinhaltet demnach drei zusammenwirkende Phasen. Diese sind:
1. Dateneingabephase durch Videocodierung, bei der vorzugsweise mit einem einfachen Extraktionscode eine Codierung bestimmter Teile der Adreßinformation erfolgt. Üblicherweise wird hierbei die ZIP/PC Information sowie ein größerer Teil der weiteren Adreßinformation vollständig ausgewertet oder es erfolgt bei fehlenden ZIP/PC eine Extraktion des Ortsnamens. Dieser Phase vorgeschaltet war bereits eine erste automatische Auswertung der Adreßinformation.
   Vorzugsweise erfolgt eine Eingabe mit einem geteilten Display. Für Vereinfachung der Eingabe wird ein einfacher Extraktionscode verwendet. z.B. ein 4stelliger Postcode, die ersten vier Alpha-Zeichen des Straßennamens und die Ziffern der Hausnummern der betreffenden Adresse. Bei dieser Extraktionscodierung ist eine Anpassung an die jeweiligen Postkonventionen ohne weiteres möglich. So kann z.B. die Anzahl der ersten Buchstaben variert werden. Vorzugsweise wird der Postcode vom Operator nur dann eingegeben, wenn die OCR-Auswertung überhaupt kein Ergebnis gebracht hat. Die Mehrzahl der Sendungen wird daher die Eingabe von Straßenangaben betreffen. Vorzugsweise kann auch eine Strukturierung der Video-Codierung derart erfolgen, daß eine Gruppe von Operatoren Postcode und Straßenangaben eingibt, während eine andere Gruppe lediglich Straßen angaben eingibt. Da ein bestimmter Prozentsatz der Post heutzutage Postfachangaben enthält, wird vorzugsweise eine geeignete Taste mit einem Postfachschlüssel belegt, die gegebenenfalls vom Operator gedrückt wird, wobei anschließend die Eingabe der Postfachnummer folgt. Für Firmenadressen, bei denen Sraßen- oder Postfachangabe fehlen, ist auch die Eingabe der Firmenzeile möglich.
2. Weitere automatische Auswertung unter Verwendung der Informationen, die bei der vorhergehenden Phase durch Videocodierung eingegeben worden sind. Die zusätzliche Information erhöht die Wahrscheinlichkeit einer vollständigen Auswertung bei der weiteren automatischen Auswertung.
   Bei nicht vollständig in der vorhergehenden Phase ausgewerteten Adreßinformationen folgt eine weitere automatische Auswertung. Wird mit einem Extraktionscode gearbeitet, so liegen für diese zwei oder mehr Eintragungen im Adreßverzeichnis vor. Bei geeigneter Extraktionscodierung sind dabei in über 90% der Fälle lediglich zwei Adreßeinträge vorhanden.
   Bei der weiteren automatischen Auswertung liegt nunmehr zusätzliche Kontextinformationen vor, und zwar ist die Anzahl der zu berücksichtigen den Adreßeinträge beschränkt durch die Anzahl der aus der Extraktionscodierung erhaltenen Kandidaten. Es kann davon ausgegangen werden, daß unter diesen Kandidaten die richtige Adresse zu finden ist. Zusätzlich ist üblicherweise die Hausnummer bekannt.
3. Weitere Videocodierung derjenigen Abbilder, für die bei den vorhergehenden Phasen keine vollständige Auswertung möglich war. Vorzugsweise werden Abbilder der nicht ausgewerteten Adressen dem Operator präsentiert, zusammen mit den Ergebnissen der vorhergehenden Videocodierung und der automatischen Auswertung der zweiten Phase. Vorzugsweise hat der Operator hierbei lediglich eine Selektion aus vorgegebenen Altemativen vorzunehmen.
   Bei der weiteren Videocodierung solcher Adreßinformationen. die in den vorhergehenden Phasen nicht vollständig ausgewertet wurden. werden vorzugsweise nicht eindeutige Ergebnisse der Extraktionscodierung oder zusätzliche sortierrelevante Informationen, die sich auf der Adressatenzeile befinden, bearbeitet. Vorzugsweise werden dem Operator sukzessive Bilder der Sendungsoberfläche präsentiert. wobei in einem Fenster die Auswertungsalternativen der Adresse oder des Adressaten dargestellt sind. Die Auswahl kann entweder durch Tastatureingabe einer Auswahlnummer, perMaus oder über einen Sprachprozessorerfolgen.

Bei einer bevorzugten Ausführungsform der Erfindung erfolgt eine Auswertung eines ersten Bestandteils der Adreßinformation und eine Auswertung eines zweiten Bestandteils der Adreßinformation und eine Prüfung der Ergebnisse dieser Auswertungen in Hinblick auf gegenseitige Konsistenz. Der erste Bestandteil der Adreßinformation kann insbesondere der ZIP- oder Postcode sein, der zweite eine Straßenangabe oder eine Hausnummer. Inkonsistenzen zwischen diesen beiden Bestandteilen können z.B. durch Lesefehler oder durch eine Falschangabe des ZIP- oder Postcodes vorkommen. Bei einer Falschangabe werden ausgehend von den ersten drei oder vier Ziffern des ZIP oder Postcodes eine Anzahl von Alternativen für den Straßennamen gewonnen. Vom Operator erfolgt eine Extraktionscodierung des zweiten Bestandteils der Adreßinfomation, woraus ebenfalls eine Anzahl von Vorschlägen für den Straßennamen gewonnen wird. Bei der Konsistenzprüfung werden nur diejenigen Vorschläge nicht zurückgewiesen, bei denen die Ergebnisse dieser beiden Auswertungen untereinander kompatibel sind.

Im folgenden wird anhand von zwei Beispielen die obengenannte Ausführungsform genauer erläutert. Auf einer Sendung sei die Adresse
Bucklestr. 5
D-7B457 Konstanz statt der korrekten Adresse Bucklestr. 5
D-78467 Konstanz aufgetragen. In diesem Fall wird bei einer Extraktionscodierung "78457 Buck 5" verwendet um aus einem Straßenverzeichnis die Eintragung "Buckley 5. Konstanz" zu erhalten. Dies ist eine korreakte Zuordnung der fehlerhaften Postleitzahl 78457. Bei der Konsistenzprüfung wird durch automatische Auswertung die Inkonsistenz von "Bucklestr." und "Buckley" festgestellt und das betreffende Auswertungsergebnis zurückgewiesen. Wird andererseits die Adreßzeile mit dem ZIP-Code und der Ortsangabe mit einer hohen Fehlerrate OCR gelesen, während die Stra-Benangabe mit niedriger Fehlerrate gelesen wird, folgt vom Operator lediglich eine Eingabe des ZIP-Codes oder eine Anzahl von Buchstaben der Ortsangabe. Vorzugsweise wird in diesem Fall dem mit geringer Fehlerrate behafteten OCR-Ergebnis Vorrang gegenüber der Operatoreingabe gegeben.

Bei einer weiteren bevorzugten Ausführungsform der Erfindung erfolgt eine Auswertung der auf die Oberfläche von Sendungen aufgebrachten Angaben durch Videocodierung in den Fällen, in denen eine automatische Auswertung deshalb nicht erfolgreich war, weil Adreßangabe und Absenderangabe von der automatischen Auswertung nicht differenziert werden konnten. Dies tritt vor allem bei Post auf, bei der die Absenderangabe unmittelbar über oder unter der Adreßangabe aufgebracht ist, z. 3. dänischer Post. Da beim Videocodieren eine Darstellung der Sendungsoberfläche für den Operator erfolgt, ist es üblicherweise leicht moglich, die betreffenden Informationen als Adreß- bzw. Absenderangabe zu identifizieren und gegebenenfalls eine Extraktionscodierung vorzunehmen.

## Patentansprüche

1. Verfahren zur Bearbeitung von Sendungen in einem automatischen Adresslesesystem, wobei ein Abbild der die Adressinformation aufweisenden Oberfläche jeder Sendung gewonnen und einer OCR-Einheit zur automatischen Auswertung zugeführt wird, und bei nicht eindeutig erkannter Adressinformation das zugehörige Abbild an einen Videocodierplatz zur Videocodierung weitergeleitet wird, **dadurch gekennzeichnet, dass** eine Entscheidung getroffen wird, ob eine vollständige Auswertung der Adressinformation des Abbildes bei der Videocodierung erfolgt ist und dass bei einer negativen Entscheidung das Abbild jeder innerhalb einer bestimmten Zeit mittels Videocodierung nicht eindeutig erkannten vollständigen Adressinformation mit den bei der Videocodierung erhaltenen Informationen über erkannte Adressteile der OCR-Einheit zu einer weiteren automatischen Auswertung zur Adressinterpretation zugeführt wird.

2. Verfahren nach Anspruch 1, **dadurch gekennzeichnet, daß** das Abbild jeder bei der weiteren automatischen OCR-Auswertung zur Adreßinterpretation nicht eindeutig erkannten vollständigen Adreßinformation mit den dabei erhaltenen Informationen einem Videocodierplatz zur weiteren Videocodierung zugeführt wird.

3. Verfahren nach Anspruch 1 oder 2, **dadurch gekennzeichnet, daß** bei der ersten Videocodierung eine Extraktionscodierung gemäß vorgegebener Extraktionsregeln erfolgt.

4. Verfahren nach Anspruch 2, **dadurch gekennzeichnet, daß** bei der weiteren Videocodierung eine Selektionscodierung derart erfolgt, daß aus einer Anzahl von alternativen Auswertungsergebnissen eine Selektion vorgenommen wird.

5. Verfahren nach Anspruch 4, **dadurch gekennzeichnet, daß** die alternativen Auswertungsergebnisse aus den nicht eindeutigen Ergebnissen der Extraktionscodierungen gebildet werden.

6. Verfahren nach Anspruch 5, **dadurch gekennzeichnet, daß** alternative Auswertungsergebnisse aus Adreßinformationen, die zusätzliche Sortierinformationen aufweisen, gebildet werden.

7. Verfahren nach einem der Ansprüche 1 bis 6, **dadurch gekennzeichnet, daß** eine Auswertung eines ersten Bestandteils der Adreßinformation erfolgt, und daß eine Auswertung eines zweiten Bestandteils derAdreßinformation erfolgt, und daß die Ergebnisse dieser Auswertungen in Hinblick auf gegenseitige Konsistenz geprüft werden.

8. Verfahren nach Anspruch 1 bis 7, **dadurch gekennzeichnet, daß** die erste automatische Auswertung der Adreßinformation On-line oder Off-line erfolgt.

9. Verfahren nach Anspruch 1 bis 8, **dadurch gekennzeichnet, daß** Sendungen, für die on-line keine vollständige weitere automatische Auswertung oder Auswertung durch weitere Videocodierung der Adreßinformation erfolgt ist, mit einer Identifizierungsmarkierung (TID) für eine off-line vorzunehmende weitere automatische oder Videocodierung versehen werden.

10. Verfahren nach Anspruch 1 bis 8, **dadurch gekennzeichnet, daß** zumindest bei einer der Videocodierungen ein Vorschaucodierungsverfahren verwendet wird.

11. Verfahren nach Anspruch 1 bis 10, **dadurch gekennzeichnet, daß** bei der Videocodierung eine Differenzierung zwischen Adreß- und Absenderinformation erfolgt.

12. Vorrichtung zur Durchführung des Verfahrens nach Anspruch 1 bis 11, mit einem automatischen Adreßlesesystem, das
- eine Vorrichtung zur Gewinnung von Abbildern von Sendungen (120),
- einen OCR-Prozessor (130) zur automatischen Auswertung von Adreßinformationen aufweisenden Abbildern der Sendungsoberflächen,
- eine Vorrichtung zur Videocodierung der die Adreßinformationen enthaltenen Abbilder der Sendungsoberflächen mit mindestens einem Videocodierplatz (200),
- einen Imagecontroler (170) zur Steuerung des Datenflußes zwischen dem OCR-Prozessor (130) und der Vorrichtung zur Videocodierung aufweist, **dadurch gekennzeichnet, daß** der Imagecontroler (170) derart ausgebildet ist, daß eine Entscheidung getroffen wird, ob eine vollständige Auswertung der Adressinformation des Abbildes bei der Videocodierung erfolgt ist, und dass bei einer negativen Entscheidung das Abbild jeder innerhalb einer bestimmten Zeit mittels Videocodierung nicht eindeutig erkannten vollständigen Adreßinformation mit den bei der Videocodierung erhaltenen Informationen über erkannte Adreßteile dem OCR-Prozessor (130) zu einer weiteren automatischen Auswertung zur Adreßinterpretation zugeführt wird.

13. Vorrichtung nach Anspruch 12, **dadurch gekennzeichnet, daß** eine Vorrichtung vorgesehen ist, um Sendungen, deren Adreßinformationen nicht vollständig on-line ausgewertet worden sind, mit einer Identifizierungsinformadon (TiD) zu versehen.

## Claims

1. Method of processing items of mail in an automatic address reading system, an image of the surface of each item of mail bearing the address information being obtained and fed to an OCR unit for automatic evaluation and, in the event of address information not being recognized unambiguously, the associated image being forwarded to a video encoding place for video encoding, **characterized in that** a decision is made as to whether complete evaluation of the address information of the image has taken place during the video encoding and **in that** in the case of a negative decision the image of each complete item of address information not recognized unequivocally within a specific time by means of video encoding, together with the information obtained during the video encoding and relating to recognized parts of the address from the OCR unit, is fed to a further automatic evaluation for address interpretation.

2. Method according to Claim 1, **characterized in that** the image of each complete item of address information not unequivocally recognized during the further automatic OCR evaluation for address interpretation, together with the information obtained thereby, is fed to a video encoding place for further video encoding.

3. Method according to Claim 1 or 2, **characterized in that** during the first video encoding, extraction encoding is carried out in accordance with predefined extraction rules.

4. Method according to Claim 2, **characterized in that** during the further video encoding, selection encoding is carried out in such a way that a selection is made from a number of alternative evaluation results.

5. Method according to Claim 4, **characterized in that** the alternative evaluation results are formed from the not unequivocal results of the extraction encoding operations.

6. Method according to Claim 5, **characterized in that** alternative evaluation results are formed from address information which has additional sorting information.

7. Method according to one of Claims 1 to 6, **characterized in that** an evaluation of a first constituent of address information is carried out, and **in that** an evaluation of a second constituent of address information is carried out, and **in that** the results of these evaluations are checked with regards to mutual consistency.

8. Method according to Claims 1 to 7, **characterized in that** the first automatic evaluation of the address information is carried out on line or off line.

9. Method according to Claims 1 to 8, **characterized in that** items of mail for which no complete further automatic evaluation or evaluation by means of further video encoding of the address information has been carried out on line are provided with an identification mark (TID) for further automatic or video encoding to be performed off line.

10. Method according to Claims 1 to 8, **characterized in that**, at least during one of the video encoding operations, a forecast encoding method is used.

11. Method according to Claims 1 to 10, **characterized in that**, during the video encoding, a differentiation is made between address information and sender information.

12. Apparatus for implementing the method according to Claims 1 to 11, having an automatic address reading system which has
- an apparatus for obtaining images of items of mail (120),
- an OCR processor (130) for automatic evaluation of images of the surfaces of the items of mail, having address information,
- an apparatus for video encoding of the images of the surfaces of the items of mail, containing the address information, with at least one video encoding place (200),
- an image controller (170) for controlling the data flow between the OCR processor (130) and the apparatus for video encoding,
**characterized in that** the image controller (170) is constructed in such a way that a decision is made as to whether complete evaluation of the address information of the image has taken place during the video encoding and that in the case of a negative decision the image of each complete item of address information not unequivocally recognized within a specific time by means of video encoding, together with the information obtained during the video encoding and relating to detected parts of the address, is fed to the OCR processor (130) for further automatic evaluation for address interpretation.

13. Apparatus according to Claim 12, **characterized in that** an apparatus is provided in order to provide items of mail whose address information has not been evaluated completely on line with an item of identification information (TID).

## Revendications

1. Procédé de traitement d'envois dans un système automatique de lecture d'adresses, dans lequel on obtient une reproduction de la surface de chaque envoi ayant l'information d'adresse et on l'envoie à une unité OCR en vue d'une évaluation automatique et, si l'information d'adresse n'a pas été reconnue sans équivoque, on retransmet la reproduction associée à un poste de codage vidéo en vue d'un codage vidéo, le procédé étant **caractérisé en ce que** l'on prend une décision sur le point de savoir si une évaluation complète de l'information d'adresse de la reproduction est effectuée dans le codage vidéo et **en ce que**, si la décision est négative, on envoie la reproduction de chaque information d'adresse complète qui n'a pas été reconnue sans équivoque au moyen du codage vidéo en un temps déterminé avec les informations obtenues par le codage vidéo par des parties d'adresses de l'unité OCR à une autre évaluation automatique en vue de l'interprétation d'adresse.

2. Procédé selon la revendication 1, **caractérisé par le fait que** la reproduction de toute information d'adresse non reconnue complètement sans équivoque lors de l'autre évaluation OCR automatique pour l'interprétation d'adresse est transmise avec les informations alors obtenues à un poste de codage vidéo pour un autre codage vidéo.

3. Procédé selon la revendication 1 ou 2, **caractérisé par le fait que**, lors du premier codage vidéo, on effectue un codage par extraction selon des règles d'extraction prescrites.

4. Procédé selon la revendication 2, **caractérisé par le fait que**, lors de l'autre codage vidéo, on effectue un codage de sélection de telle sorte qu'on effectue une sélection parmi un certain nombre de résultats d'évaluation alternatifs.

5. Procédé selon la revendication 4, **caractérisé par le fait qu'**on forme les résultats d'évaluation alternatifs à partir des résultats équivoques des codages par extraction.

6. Procédé selon la revendication 5, **caractérisé par le fait qu'**on forme des résultats d'évaluation alternatifs à partir des informations d'adresse qui comportent des informations de tri supplémentaires.

7. Procédé selon l'une des revendications 1 à 6, **caractérisé par le fait qu'**on effectue une évaluation d'une première partie de l'information d'adresse, qu'on effectue une évaluation d'une deuxième partie de l'information d'adresse et qu'on contrôle les résultats de ces évaluations quant à leur cohérence.

8. Procédé selon l'une des revendications 1 à 7, **caractérisé par le fait que** la première évaluation automatique de l'information d'adresse s'effectue online ou offline.

9. Procédé selon l'une des revendications 1 à 8, **caractérisé par le fait que** des envois, pour lesquels il n'y a pas eu online une autre évaluation automatique complète ou une évaluation complète par un autre codage vidéo de l'information d'adresse, sont munis d'une marque d'identification (TID) pour une autre évaluation automatique ou un autre codage vidéo à effectuer offline.

10. Procédé selon l'une des revendications 1 à 8, **caractérisé par le fait qu'**on utilise au moins pour l'un des codages vidéo un procédé de codage par aperçu.

11. Procédé selon l'une des revendications 1 à 10, **caractérisé par le fait qu'**on effectue lors du codage vidéo une différenciation entre information d'adresse de destinataire et information d'expéditeur.
- la reproduction de toute information d'adresse non reconnue sans équivoque au moyen du codage vidéo en un certain temps est transmise avec les informations obtenues lors du codage vidéo et concernant des parties d'adresse reconnues au processeur OCR (130) pour une autre évaluation automatique en vue de l'interprétation d'adresse.

12. Dispositif pour effectuer le procédé suivant l'une des revendications 1 à 11, comprenant un système automatique de lecture d'adresse, qui comporte
- un dispositif d'obtention de reproductions d'envois (120),
un processeur OCR (130) pour l'évaluation automatique de reproductions de surfaces d'envois comportant des informations d'adresse,
- un dispositif pour le codage vidéo des reproductions, contenant les informations d'adresses, des surfaces d'envois ayant au moins un poste de codage vidéo (200),
- un contrôleur de reproduction (170) pour la commande du flux de données entre le processeur OCR (130) et le dispositif pour le codage vidéo,
**caractérisé par le fait que** le contrôleur de reproduction (170) est conçu de telle sorte qu'il est pris une décision sur le point de savoir si une évaluation complète de l'information d'adresse de la reproduction s'effectue dans le codage vidéo et que, si la décision est négative, la reproduction de toute information d'adresse non reconnue sans équivoque au moyen du codage vidéo en un certain temps est transmise avec les informations obtenues lors du codage vidéo et concernant des parties d'adresse reconnues au processeur OCR (130) pour une autre évaluation automatique en vue d' l'interprétation d'adresse.

13. Dispositif selon la revendication 12, **caractérisé par le fait qu'**il est prévu un dispositif pour munir des envois, dont les informations d'adresse n'ont pas été évaluées complètement online, d'une information d'identification (TID).
